(19) Europäisches Patentamt
European Patent Office
Office européen des brevets

(11) EP 4 400 527 A1

(12) EUROPEAN PATENT APPLICATION
published in accordance with Art. 153(4) EPC

(43) Date of publication:
**17.07.2024 Bulletin 2024/29**

(21) Application number: **21957198.1**

(22) Date of filing: **23.09.2021**

(51) International Patent Classification (IPC):
***C08G 63/183*** (2006.01) ***C08G 63/672*** (2006.01)
***C08L 67/02*** (2006.01) ***C08G 63/78*** (2006.01)

(86) International application number:
**PCT/CN2021/119956**

(87) International publication number:
**WO 2023/039923 (23.03.2023 Gazette 2023/12)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **14.09.2021 CN 202111076704**

(71) Applicants:
- **Zhuhai Wango Chemical Co., Ltd.**
  **Zhuhai, Guangdong 519000 (CN)**
- **KINGFA SCI. & TECH. CO., LTD.**
  **Guangzhou, Guangdong 510663 (CN)**

(72) Inventors:
- **ZHANG, Chuanhui**
  **Guangzhou, Guangdong 510663 (CN)**
- **CHEN, Pingxu**
  **Guangzhou, Guangdong 510663 (CN)**
- **YE, Nanbiao**
  **Guangzhou, Guangdong 510663 (CN)**
- **OUYANG, Chunping**
  **Guangzhou, Guangdong 510663 (CN)**
- **MAI, Kaijin**
  **Guangzhou, Guangdong 510663 (CN)**
- **DONG, Xueteng**
  **Guangzhou, Guangdong 510663 (CN)**
- **ZENG, Xiangbin**
  **Guangzhou, Guangdong 510663 (CN)**
- **LU, Changli**
  **Guangzhou, Guangdong 510663 (CN)**
- **CAI, Tongmin**
  **Guangzhou, Guangdong 510663 (CN)**

(74) Representative: **Petraz, Gilberto Luigi et al**
**GLP S.r.l.**
**Viale Europa Unita, 171**
**33100 Udine (IT)**

# (54) SEMI-AROMATIC POLYESTER, AND PREPARATION METHOD THEREFOR AND APPLICATION THEREOF

(57) Disclosed are a semi-aromatic polyester, and a preparation method therefor and a use thereof. In the present invention, on the basis of the total molar amount of diacid, the molar content of a repeating unit $-CH_2CH_2CH_2CH_2-O-$ in dimer(1,4-butanediol) is controlled to be 0.05-0.35 mol%, which can effectively improve the resin color of the semi-aromatic polyester.

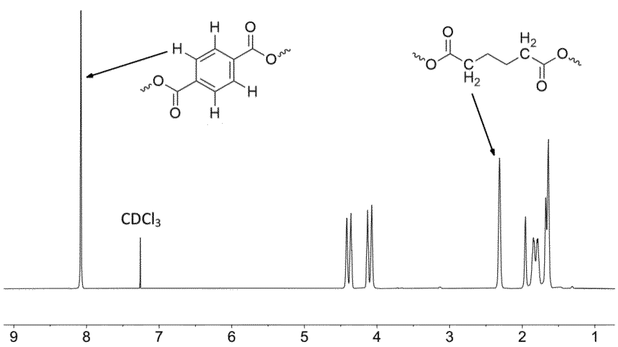


FIG. 1

EP 4 400 527 A1

## Description

### TECHNICAL FIELD

The present invention relates to the technical field of biodegradable polyesters, specifically relates to a semi-aromatic polyester, a preparation method therefor and use thereof, and in particular to a semi-aromatic polyester with a specific content of dimer(1,4-butanediol), a preparation method therefor and use thereof.

### BACKGROUND

Currently, thermoplastic aromatic polyesters widely used in industry and daily life have good thermal stability and mechanical properties, and are easy to process and low in price. For example, polyethylene terephthalate (PET) and polybutylene terephthalate (PBT) have been extensively applied in the manufacture of fibers, films, and containers. However, these aromatic polyesters are hardly degraded after being discarded. Up to now, no microorganism has yet been observed to directly and obviously degrade aromatic polyesters such as, PET and PBT. To integrate the excellent performance of aromatic polyesters, those skilled in the art have been devoted to studying the synthesis of aliphatic-aromatic copolyesters since 1980s; that is, aromatic chain segments are introduced into aliphatic polyesters, which ensures that the copolyester not only has excellent performance of aromatic polyesters, but also possesses biodegradability.

For the improvement of polyester color, it is generally controlled by adding a stabilizer during the polycondensation within the industry, which has become a conventional technology to aromatic polyesters such as PET and PBT. For example, it is indicated in the (Rieckmann, T.; Volker, S., 2. Poly(ethylene terephthalate) Polymerization - Mechanism, Catalysis, Kinetics, Mass Transfer and Reactor Design. In Modern Polyesters: Chemistry and Technology of Polyesters and Copolyesters, Scheirs, J.; Long, T. E., Eds. John Wiley & Sons, Ltd.: Chichester, 2003; p 63.) that compounds of phosphoric acid (e.g., triphenyl phosphate and triphenyl phosphite) are added during the polymerization of PET as a stabilizer to greatly reduce the yellowing degree of PET. It is also indicated in WO2018/219708A1 that the addition of 0.03% to 0.04% by weight of a phosphorus compound during the condensation of the aliphatic-aromatic copolyester causes it to have a whiteness index of at least 25 according to ASTM E313-73.

CN212560068U discloses a production system of a biodegradable polyester. The esterification kettle of the production system is connected to a process column; water and tetrahydrofuran produced in the process of esterification together with the excessive 1,4-butanediol, etc. enter the process column for rectification; the bottom of the process column is heated via a liquid heating medium; the recovered 1,4-butanediol discharged from the bottom of the tower is sent back to the reflux inlet of the esterification kettle. In this way, the recovered 1,4-butanediol enters into the reaction system via the reflux inlet and participates in the esterification reaction again. However, such a simple process column rectification only distills off low-boiling point water, tetrahydrofuran, etc. from the top of the process column; the remaining substances are totally refluxed to the esterification kettle from the bottom of the process column; these remaining substances contain a large number of 1,4-butanediol polymers and other by-products. These by-products will take part in the polymerization reaction after entering the esterification kettle, leading to the performance deterioration of the subsequent aliphatic-aromatic polyester.

In conclusion, those skilled in the art have not yet recognized that by-product impurities will affect the performance, particularly color of copolyesters at present.

### SUMMARY

The object of the present invention is to overcome the shortcomings of the prior art and to provide a semi-aromatic polyester with a specific content of dimer(1,4-butanediol), a preparation method therefor, and use thereof.

The aforesaid object of the present invention is achieved by the following technical solution:

In one aspect, the present invention provides a semi-aromatic polyester, including repeating units derived from the following components:

a first component A, based on a total molar weight of the first component A, including:

- a1) 35-65 mol%, and preferably 40-60 mol% of at least one aliphatic dicarboxylic acid, or an ester derivative thereof or an anhydride derivative thereof,
- a2) 35-65 mol%, and preferably 40-60 mol% of at least one aromatic dicarboxylic acid, or an ester derivative thereof or an anhydride derivative thereof,

a second component B: 1,4-butanediol; and

a third component C: dimer(1,4-butanediol) having a molecular formula of HO-$CH_2CH_2CH_2CH_2$-O-$CH_2CH_2CH_2CH_2$-OH; based on the total molar weight of the first component A, a molar content of a repeating unit -$CH_2CH_2CH_2CH_2$-O- in the third component C is 0.05-0.35 mol%.

It is found in the present invention that based on the total molar weight of the first component A, the molar content of the repeating unit -$CH_2CH_2CH_2CH_2$-O- in the third component C is controlled to 0.05-0.35 mol%, and thus, the resin color of the semi-aromatic polyester can be effectively improved, and the performance of the obtained copolyester will be kept the same.

As a detailed embodiment, the component a1) is selected from one or more of oxalic acid, dimethyl oxalate, malonic acid, dimethyl malonate, succinic acid, dimethyl succinate, methylsuccinic acid, glutaric acid, dimethyl glutarate, bis(2-hydroxyethyl) glutarate, bis(3-hydroxypropyl)glutarate, bis(4-hydroxybutyl) glutarate, 2-methylglutaric acid, 3-methylglutaric acid, adipic acid, dimethyl adipate, bis(2-hydroxyethyl) adipate, bis(3-hydroxypropyl) adipate, bis(4-hydroxybutyl) adipate, 3-methyladipic acid, 2,2,5,5-tetramethyladipic acid, pimelic acid, suberic acid, azelaic acid, dimethyl azelate, decanedioic acid, 1,11-undecanedicarboxylic acid, 1,10-decanedicarboxylic acid, undecandioic acid, 1,12-dodecanedicarboxylic acid, hexadecanedioic acid, eicosandioic acid, tetracosandioic acid, dimer acid, or an ester derivative thereof, or an anhydride derivative thereof; preferably, selected from one or more of succinic acid, adipic acid, decanedioic acid, 1,12-dodecanedicarboxylic acid, or an ester derivative thereof or an anhydride derivative thereof, more preferably selected from one or two of adipic acid, decanedioic acid, or an ester derivative thereof or an anhydride derivative thereof, and most preferably, adipic acid, or an ester derivative thereof or an anhydride derivative thereof.

Meanwhile, the ester derivatives formed by the above aliphatic dicarboxylic acids also fall within the category of the component a1); preferably, the ester derivative of the aliphatic dicarboxylic acid is selected from dialkyl esters formed by aliphatic dicarboxylic acids. The dialkyl esters are, for examples, dimethyl ester, diethyl ester, di-n-propyl ester, diisopropyl ester, di-n-butyl ester, diisobutyl ester, di-tert butyl ester, di-n-pentyl ester, di-iso-amyl ester, or di-n-hexyl ester.

Meanwhile, the anhydride derivatives formed by the above aliphatic dicarboxylic acids also fall within the category of the component a1).

The aliphatic dicarboxylic acid or the ester derivative thereof or the anhydride derivative thereof in the present invention may be used alone or used in a form of a mixture of two or more thereof.

In the present invention, the component a2) is selected from one or more of terephthalic acid, dimethyl terephthalate, bis(2-hydroxyethyl) terephthalate, bis(3-hydroxypropyl) terephthalate, bis(4-hydroxybutyl) terephthalate, isophthalic acid, dimethyl isophthalate, bis(2-hydroxyethyl) isophthalate, bis(3-hydroxypropyl) isophthalate, bis(4-hydroxybutyl) isophthalate, 2,6-naphthalenedicarboxylic acid, dimethyl 2,6-benzenedicarboxylate, 2,7-naphthalenedicarboxylic acid, dimethyl 2,7-benzenedicarboxylate, 3,4'-diphenyl ether dicarboxylic acid, dimethyl 3,4'-diphenyl ether dicarboxylate, 4,4'-diphenyl ether dicarboxylic acid, dimethyl 4,4'-diphenyl ether dicarboxylate, 3,4'-phenylthioether dicarboxylic acid, dimethyl 3,4'-phenylthioether dicarboxylate, 4,4'-phenylthioether dicarboxylic acid, dimethyl 4,4'-phenylthioether dicarboxylate, 3,4'-diphenylsulfone dicarboxylic acid, dimethyl 3,4'-diphenylsulfone dicarboxylate, 4,4'-diphenylsulfone dicarboxylic acid, dimethyl 4,4'-diphenylsulfone dicarboxylate, 3,4'-benzophenone dicarboxylic acid, dimethyl 3,4'-benzophenone dicarboxylate, 4,4'-benzophenone dicarboxylic acid, dimethyl 4,4'-benzophenone dicarboxylate, 1,4-naphthalenedicarboxylic acid, dimethyl 1,4-naphthalene dicarboxylate, 4,4'-methylenebis(benzoic acid), 4,4'-methylenebis(dimethyl benzoate), or an ester derivative thereof or an anhydride derivative thereof, and preferably terephthalic acid, or an ester derivative thereof or an anhydride derivative thereof.

The third component C is dimer(1,4-butanediol) having a molecular formula of HO-$CH_2CH_2CH_2CH_2$-O-$CH_2CH_2CH_2CH_2$-OH, and based on the total molar weight of the first component A, the molar content of the repeating unit -$CH_2CH_2CH_2CH_2$-O- in the third component C is preferably 0.05-0.30 mol%.

In the present invention, if necessary, the semi-aromatic polyester further includes a fourth component D which is preferably a compound containing at least three functional groups, and preferably a compound containing three to six functional groups. The fourth component D is preferably selected from one or more of tartaric acid, citric acid, malic acid, trimethylolpropane, trimethylolethane, pentaerythritol, polyether triol, glycerol, 1,3,5-benzenetricarboxylic acid, 1,2,4-benzenetricarboxylic acid, 1,2,4-benzenetricarboxylic anhydride, 1,2,4,5-benzenetetracarboxylic acid, pyromellitic dianhydride, and more preferably, trimethylolpropane, pentaerythritol, or glycerol.

Based on the total molar weight of the first component A, the fourth component D has a content of 0.01-5.0 mol%, and further preferably 0.02-2.0 mol%.

The semi-aromatic polyester may further include a fifth component E as a chain extender.

The chain extender is a mixture of one or more isocyanates, isocyanurates, peroxides, epoxides, oxazolines, oxazines, lactams, carbodiimides or polycarbodiimides that contain two or more functional groups.

The isocyanate containing two or more functional groups may be an aromatic isocyanate or an aliphatic isocyanate, and preferably aromatic diisocyanate or aliphatic diisocyanate. Preferably, the aromatic diisocyanate is preferably toluene 2,4-diisocyanate, toluene 2,6-diisocyanate, diphenylmethane 2,2'-diisocyanate, diphenylmethane 2,4'-diisocyanate, diphenylmethane 4,4'-diisocyanate, naphthalene 1,5-diisocyanate, or xylene diisocyanate.

More preferably, the aromatic diisocyanate is diphenylmethane 2,2'-diisocyanate, diphenylmethane 2,4'-diisocyanate, or diphenylmethane 4,4'-diisocyanate.

Preferably, the aliphatic diisocyanate is preferably any linear or branched alkylene diisocyanate or cycloalkylene diisocyanate containing 2-20 carbon atoms, and more preferably, containing 3-12 carbon atoms. The aliphatic diisocyanate may be hexamethylene 1,6-diisocyanate, isophorone diisocyanate, or methylenebis(4-isocyanatocyclohexane). Most preferably, the aliphatic diisocyanate is hexamethylene 1,6-diisocyanate, and isophorone diisocyanate.

The isocyanate containing two or more functional groups may be further tri-(4-isocyanatophenyl) methane with three rings.

Preferably, the isocyanurate containing two or more functional groups may be an aliphatic isocyanurate derived from alkylene diisocyanates or cycloalkylene diisocyanates having 2-20 carbon atoms, and preferably 3-12 carbon atoms, e.g., isophorone diisocyanate or methylenebis(4-isocyanatocyclohexane). The alkylene diisocyanates may be linear or branched compounds, particularly, preferably cyclic tripolymer, pentamer, or higher oligomer isocyanurates based on n-hexamethylene diisocyanates, e.g., hexamethylene 1,6-diisocyanate.

Preferably, the peroxide containing two or more functional groups is selected from a benzoyl peroxide, 1,1-di(tert-butylperoxo)-3,3,5-trimethylcyclohexane, 1,1-di(tert-butylperoxo)methylcyclododecane, 4,4-di(butylperoxo)n-butyl valerate, dicumyl peroxide, tert-butyl peroxybenzoate, dibutyl peroxide, $\alpha,\alpha$-di(tert-butylperoxo)diisopropylbenzene, 2,5-dimethyl-2,5-di(tert-butylperoxo)hexane, 2,5-dimethyl-2,5-di(tert-butylperoxo)hexyl-3-yne, or tert-butylcumyl peroxide.

Preferably, the epoxide containing two or more functional groups is selected from hydroquinone, diglycidyl ether, resorcinol diglycidyl ether, 1,6-hexanediol diglycidyl ether and hydrogenated bisphenol A diglycidyl ether, diglycidyl terephthalate, diglycidyl tetrahydrophthalate, diglycidyl hexahydrophthalate, dimethyl diglycidyl phthalate, phenylene diglycidyl ether, ethylidene diglycidyl ether, trimethylene diglycidyl ether, tetramethylene diglycidyl ether, hexamethylene diglycidyl ether, sorbitol diglycidyl ether, polyglycerol polyglycidyl ether, pentaerythritol polyglycidyl ether, diglycerol polyglycidyl ether, glycerol polyglycidyl ether, trimethylolpropane polyglycidyl ether, resorcinol diglycidyl ether, neopentyl glycol diglycidyl ether, ethanediol diglycidyl ether, diglycol diglycidyl ether, polyethylene glycol diglycidyl ether, propylene glycol diglycidyl ether, dipropylene glycol diglycidyl ether, polypropylene glycol diglycidyl ether, or polybutanediol diglycidyl ether.

The epoxide containing two or more functional groups is further preferably a copolymer based on styrene, acrylate, and/or methacrylate and containing an epoxy group; the epoxy group is preferably glycidyl methacrylate (GMA). It has been proved that the beneficial compound is a copolymer having a GMA ratio of higher than 20 wt%, preferably higher than 30 wt%, and more preferably higher than 50 wt%. The epoxide equivalent weight in these copolymers is preferably 150-3000 g/equivalent, and more preferably 200-500 g/equivalent. The weight-average molecular weight (Mw) of the copolymers is preferably 2,000-25,000, and more preferably 3,000-8,000. The number-average molecular weight (Mn) of the copolymers is preferably 400-6,000, and more preferably 1,000-4,000. Polydispersity index (Q=Mw/Mn) is preferably 1.5-5.

The oxazoline/oxazine containing two or more functional groups is preferably dioxazoline or dioxazine, its bridging portion is a single bond, $(CH_2)$z-alkylene, where z = 2, 3 or 4, e.g., methylene, ethyl-1,2-diyl, propyl-1,3-diyl, propyl-1,2-diyl, or phenylene. Specifically, the dioxazoline is 2,2'-di(2-oxazoline), di(2-oxazolinyl)methane, 1,2-di(2-oxazolinyl)ethane, 1,3-di(2-oxazolinyl)propane, 1,4-di(2-oxazolinyl)butane, 2,2'-di(2-oxazoline), 2,2'-di(4-methyl-2-oxazoline), 2,2'-di(4,4'-dimethyl-2-oxazoline), 2,2'-di(4-ethyl-2-oxazoline), 2,2'-di(4,4'-diethyl-2-oxazoline), 2,2'-di(4-propyl-2-oxazoline), 2,2'-di(4-butyl-2-oxazoline), 2,2'-di(4-hexyl-2-oxazoline), 2,2'-di(4-phenyl-2-oxazoline), 2,2'-di(4-cyclohexyl-2-oxazoline), 2,2'-di(4-phenylmethyl-2-oxazoline), 2,2'-p-phenylenedi(4-methyl-2-oxazoline), 2,2'-p-phenylenedi(4,4'-dimethyl-2-oxazoline), 2,2'-m-phenylenedi(4-methyl-2-oxazoline), 2,2'-m-phenylenedi(4,4'-dimethyl-2-oxazoline), 2,2'-hexamethylenedi(2-oxazoline), 2,2'-octamethylenedi(2-oxazoline), 2,2'-decamethylenedi(2-oxazoline), 2,2'-ethylidenedi(4-methyl-2-oxazoline), 2,2'-tetramethylenedi(4,4'-dimethyl-2-oxazoline), 2,2'-9,9'-diphenoxyethanedi(2-oxazoline), 2,2'-cyclohexylenedi(2-oxazoline), or 2,2'-diphenylene(2-oxazoline).

Specifically, dioxazine is 2,2'-di(2-dioxazine), di(2-dioxazinyl)methane, 1,2-di(2-dioxazinyl)ethane, 1,3-di(2-dioxazinyl)propane, 1,4-di(2-dioxazinyl)butane, 1,4-di(2-dioxazinyl)benzene, 1,2-di(2-dioxazinyl)benzene, or 1,3-di(2-dioxazinyl)benzene.

more preferably, 1,4-di(2-oxazolinyl)benzene, 1,2-di(2-oxazolinyl)benzene, or 1,3-di(2-oxazolinyl)benzene.

The carbodiimide or polycarbodiimide containing two or more functional groups is preferably N,N'-di-2,6-diisopropylphenyl carbodiimide, N,N'-di-o-tolyl carbodiimide, N,N'-diphenyl carbodiimide, N,N'-dioctyldecyl carbodiimide, N,N'-di-2,6-dimethylphenyl carbodiimide, N-tolyl-N'-cyclohexyl carbodiimide, N,N'-di-2,6-di-tert-butylphenyl carbodiimide, N-tolyl-N'-phenyl carbodiimide, N,N'-di-p-nitrophenyl carbodiimide, N,N'-di-p-aminophenyl carbodiimide, N,N'-di-p-hydroxyphenyl carbodiimide, N,N'-dicyclohexyl carbodiimide, N,N'-di-p-tolyl carbodiimide, p-phenylenebis-di-o-tolyl carbodiimide, p-phenylenebis-dicyclohexyl carbodiimide, hexamethylenebis-dicyclohexyl carbodiimide, 4,4'-dicyclohexylmethane carbodiimide, ethylidenebisdiphenyl carbodiimide, N,N'-phenylmethyl-carbodiimide, N-octadecyl-N'-phenyl

carbodiimide, N-benzyl-N'-phenyl carbodiimide, N-octadecyl-N"-tolyl carbodiimide, N-cyclohexyl-N'-tolyl carbodiimide, N-phenyl-N'-tolyl carbodiimide, N-benzyl-N'-tolyl carbodiimide, N,N'-di-o-ethylphenyl carbodiimide, N,N'-di-p-ethylphenyl carbodiimide, N,N'-di-o-isopropylphenyl carbodiimide, N,N'-di-p-isopropylphenyl carbodiimide, N,N'-di-o-isobutylphenyl carbodiimide, N,N'-di-p-isobutylphenyl carbodiimide, N,N'-di-2,6-diethylphenyl carbodiimide, N,N'-di-2-ethyl-6-isopropylphenyl carbodiimide, N,N'-di-2-isobutyl-6-isopropylphenyl carbodiimide, N,N'-di-2,4,6-trimethylphenyl carbodiimide, N,N'-di-2,4,6-triisopropylphenyl carbodiimide, N,N'-di-2,4,6-triisobutylphenyl carbodiimide, diisopropyl carbodiimide, dimethyl carbodiimide, diisobutyl carbodiimide, dioctyl carbodiimide, tert-butylisopropyl carbodiimide, di-β-naphthyl carbodiimide, or di-tert-butyl carbodiimide.

Preferably, the content of the fifth component E is 0.01-5 mol% based on the total molar weight of the first component A.

Preferably, the semi-aromatic polyester has a viscosity number of 100-350 ml/g as determined in a phenol/o-dichlorobenzene solution having a weight ratio of 1:1 in a 25±0.05°C thermostatic water bath in accordance with the provision of GB/T 17931-1999.

Preferably, the semi-aromatic polyester has a carboxyl group content of 5-60 mmol/kg, and further preferably 10-50 mmol/kg.

For another, the present invention further provides a method for preparing the above semi-aromatic polyester, including the following steps:

S1: mixing a first component A, a second component B and a portion of a catalyst (a fourth component D being also added if necessary), and heating up to 150-280°C for esterification reaction for 1-2 h in an esterification reactor to obtain an esterification product AB, where a molar content of the second component B is usually 1.1-3.0 times that of the first component A, and the excessive second component B is recycled to the esterification reactor by a purification device connected to the esterification reactor;

S2: performing primary polycondensation on the esterification product AB obtained in the step S1 under the action of the remaining catalyst at a reaction temperature of 230-270°C until a reaction product reaches a viscosity number of 20-60 ml/g as determined in a phenol/o-dichlorobenzene solution having a weight ratio of 1:1 in a 25±0.05°C thermostatic water bath in accordance with the provision of GB/T 17931-1999; and

S3: transferring the primary polycondensation product obtained in the step S2 into a final polycondensation kettle for continuous polycondensation at a temperature of 220-270°C until a reaction product reaches a viscosity number of 100-250 ml/g as determined in a phenol/o-dichlorobenzene solution having a weight ratio of 1:1 in a 25±0.05°C thermostatic water bath in accordance with the provision of GB/T 17931-1999, and the reaction product has a carboxyl group content of 5-60 mmol/kg, to obtain the semi-aromatic polyester.

Preferably, in the step S1, during the preparation of the esterification product AB, the catalyst is added in an amount of 0.001-1% of a final weight of the semi-aromatic polyester. Preferably, the catalyst is added in an amount of 0.02-0.2% of the final weight of the semi-aromatic polyester. In the step S1, the catalyst is added in an amount of 50-80 wt% of a total weight of the catalyst. The amount of the catalyst added is controlled to make the subsequent machining process more stable. Furthermore, the catalyst may be a tin compound, an antimony compound, a cobalt compound, a lead compound, a zinc compound, an aluminium compound or a titanium compound, more preferably, a zinc compound, an aluminium compound or a titanium compound, most preferably, a titanium compound. The titanium compound, e.g., tetrabutyl orthotitanate or tetraisopropyl orthotitanate, has the advantage of low toxicity of the residue in the product or down-stream product over other compounds. This property is especially important in biodegradable polyesters because it will directly enter the environment in a form of a compost bag or cover film.

Preferably, in the step S1, the purification device connected to the esterification reactor is a combination of a process column and a short-path distiller.

Molecular distillation is a kind of distilling method operated in high vacuum; at this time, the mean free path of steam molecules is greater than the distance between the evaporation surface and condensation surface such that liquid mixture is separated by means of the difference in the evaporation rate of each component in the feed liquid.

Short-path distiller is designed according to the principle of molecular distillation, and is a model to simulate molecular distillation. Due to the distance between its heating surface and the cooling surface is very small, and resistance is very small, it is thus called a short-path distiller. A built-in condenser can function in liquifying vaporized vapor phases instantaneously to shrink volume and thus, can maintain the high vacuum in the equipment. The operating vacuum of the short-path distiller may be up to 0.1 Pa (absolute pressure), which is unreachable to other evaporation/distillation equipment. Therefore, the short-path distiller is especially suitable for the materials that possess a high boiling point at normal pressure and can be hardly isolated by a common separation method. As a novel liquid-liquid separation equipment, the short-path distiller has been successfully applied in many industries.

The short-path distiller may be an SPD short-path distiller from Wuxi Hengyi Chemical Machinery Co., Ltd. (http://www.wxhengyi.com/index.asp).

The process column is mainly to separate substances with a low-boiling point, e.g., tetrahydrofuran, water and other by-products. These substances with a low-boiling point flow out of the tower top and then flow into a tetrahydrofuran purification apparatus; substances with a high-boiling point, 1,4-butanediol and other by-products flow out of the tower bottom, and flow into a SPD short-path distiller, and recovered into the esterification reactor after being purified by the short-path distiller.

In the step S2, the remaining catalyst may be added if necessary. In the step S2, the reaction temperature is more preferably 240-260°C. In the step S2, the pressure is generally set as 0.1-0.5 bar, and preferably, 0.2-0.4 bar at the beginning; and the pressure is generally set as 5-200 mbar, and more preferably, 10-100 mbar at the end of the S2. In the step S2, the reaction time is generally 1-5 h; usually, after such a period of time, the reaction system may generate the prepolyester having a viscosity number of 20-60 ml/g as determined in a phenol/o-dichlorobenzene solution having a weight ratio of 1:1 in a 25$\pm$0.05°C thermostatic water bath according to GB/T 17931-1999. The carboxyl group content in the prepolyester after experiencing the reaction in the S2 is generally10-60 mmol/kg.

In the step S3, a passivator may be added to the reaction system if necessary. The available passivator is usually a compound of phosphorus including phosphoric acid, phosphorous acid, and esters thereof. A passivator is usually added in the step S3 when a high-active titanium catalyst is used in the system.

In the step S3, the reaction temperature of the continuous polycondensation is preferably 230-270°C. In the step S3, the pressure is usually controlled within 0.2-5 mbar, and more preferably, 0.5-3 mbar at the beginning. The reaction time of the continuous polycondensation is preferably 30-90 min, and more preferably 40-80 min. The carboxyl group content in the semi-aromatic polyester after experiencing the reaction in the S3 is 5-60 mmol/kg, and preferably 10-50 mmol/kg.

If necessary, at the end of the step S3, a step S4 is conducted: adding the semi-aromatic polyester obtained in the step S3 to a twin-screw extruder together with a fifth component E in an amount of 0.01-5.0 mol% (based on the total molar weight of the first component A) for retention for 0.5-15 min at a reaction temperature of 200-270°C to obtain a semi-aromatic polyester; the semi-aromatic polyester reaches a viscosity number of 150-350 ml/g as determined in a phenol/o-dichlorobenzene solution having a weight ratio of 1:1 in a 25$\pm$0.05°C thermostatic water bath in accordance with the provision of GB/T 17931-1999.

In a further aspect, the present invention further provides use of the above semi-aromatic polyester in preparing a compost-degradable product; the compost-degradable product is a fiber, a film, or a container, etc.

The present invention further provides use of the above semi-aromatic polyester in preparing a sucker. Semi-aromatic polyester may be blended with polylactic acid (PLA), etc. and modified, and then used as a raw material of a sucker. The sucker is required to have certain hydrolysis resistance as it contacts liquid. Moreover, considering the degradable requirement, the hydrolysis resistance should be not too strong, or the degradation cycle is too long. Based on the practical use, the degradation property is evaluated by testing the 30-day weight retention rate. The 30-day weight retention rate is within a range of 50-60% better, and the higher the retention rate is, the better the degradation property is within such a range. When the 30-day weight retention rate is greater than 65%, the degradation property is too poor, when it is lower than 45%, degradation is too fast. In a still further aspect, the present invention further provides a semi-aromatic polyester molding composition, including the following components in weight percentage:

5-95 wt% of the above semi-aromatic polyester;
5-95 wt% of an additive and/or other polymers; and
0-70 wt% of a reinforcing material and/or a filler.

As a detailed embodiment, the additive and/or other polymers may be, at least one or more components selected from aliphatic polyesters, polycaprolactones, starch, cellulose, polyhydroxyalkanoates, and polylactic acids.

Compared with the prior art, the present invention has the following beneficial effects:
The present invention provides a semi-aromatic polyester, a preparation method therefor and use thereof. Based on the total molar weight of the diacid, the molar content of the repeating unit $-CH_2CH_2CH_2CH_2-O-$ in dimer(1,4-butanediol) is controlled to 0.05-0.35 mol%, and preferably 0.05-0.30 mol%; and thus, the resin color of the semi-aromatic polyester can be effectively improved, and the performance of the copolyester will be also kept the same.

## BRIEF DESCRIPTION OF DRAWINGS

FIG. 1 shows $^1H$ NMR of a PBAT obtained in Example 2 as determined by an AV 500 nuclear magnetic resonance spectrometer from Bruker;
FIG. 2 shows $^1H$ NMR of the key peak of a repeating unit in dimer(1,4-butanediol) of the PBAT obtained in Example 8.1;
FIG. 3 is a schematic diagram showing an assembled apparatus of a process column connected to an esterification

reactor and a short-path distiller in the examples of the present invention;

FIG. 4 is a schematic diagram showing an apparatus, i.e., a primary process column connected to a traditional esterification reactor; and

FIG. 5 shows $^1H$ NMR of nearby peaks of hydrogen atoms in $CH_2$ linked to the oxygen atom of the ether bond in a polymerization product obtained by adding poly(1,4-butanediol) having a molecular weight of 1000 in Example 8.6.

## DETAILED DESCRIPTION OF EMBODIMENTS

Raw materials, reagents and solvents used in the present invention, are commercially available without any treatment, unless otherwise specified. The present invention will be further described specifically in combination with examples; however, the embodiments of the present invention are not limited to the following examples. Moreover, any other changes, modifications, replacements, combinations and simplifications without departing from the spirit and principle of the present invention shall be equivalent replacements and thus, shall fall within the scope of protection of the present invention. In addition, "part(s)" and "%" in the description, unless otherwise specified, denote "part(s) by mass" and "mass%", respectively.

Test method:

Test methods for the purity of fresh 1,4-butanediol, recovered coarse 1,4-butanediol, recovered high-purity 1,4-butanediol are as follows:

The purity of 1,4-butanediol is tested by reference to the national standard GB/T 24768-2009 1,4-Butanediol for industrial use.

The fresh 1,4-butanediol in all the examples and comparative examples has the same purity of not less than 99.7%, and purchased from MarkorChem. Raw materials such as terephthalic acid, adipic acid, decanedioic acid, glycerol, tetrabutyl orthotitanate, and phosphorous acid are all commercially available.

Test for the content of the third component C in the semi-aromatic polyester (poly(butylene adipate-co-terephthalate) (PBAT) obtained in Example 2 is set as an example):

20 mg of the semi-aromatic polyester sample were taken and dissolved into 0.6 ml of deuterated chloroform, and then $^1H$ NMR was measured by an AV 500 nuclear magnetic resonance spectrometer from Bruker at room temperature, and the chloroform solvent peak (7.26 ppm) was calibrated.

As can be seen from the reference: Chen, X; Chen, W.; Zhu, G.; Huang, F.; Zhang, J., Synthesis, 1H-NMR characterization, and biodegradation behavior of aliphatic-aromatic random copolyester. J. Appl. Polym. Sci. 2007, 104(4): 2643-2649, 4 hydrogen atoms on the benzene ring of the repeating unit of terephthalic acid appeared nearby 8.10 ppm; 4 hydrogen atoms in the two $CH_2$ units adjacent to the carbonyl in the repeating unit of adipic acid appeared nearby 2.33 ppm. The results are shown in FIG. 1. As such, the molar content of the two acid components may be denoted by the integral areas ($I_T$ and $I_A$) of the two peaks at 8.10 ppm and 2.33 ppm:

The molar content of terephthalic acid in PBAT is equal to $I_T/(I_T+I_A)\times100\%$

The molar content of adipic acid in PBAT is equal to $I_A/(I_T+I_A)\times100\%$

As can be seen from the reference: Miles, W. H.; Ruddy, D. A.; Tinorgah, S.; Geisler, R. L., Acylative Dimerization of Tetrahydrofuran Catalyzed by Rare-Earth Triflates. Synth. Commun. 2004, 34(10): 1871-1880, the $^1H$ NMR chemical shifts (labeled on the corresponding carbon atoms of the structural formula, unit: ppm) of the product of dimer(1,4-butanediol), benzoic acid, and acetic acid are shown in the following figure:

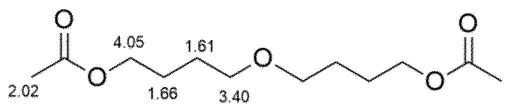
1a

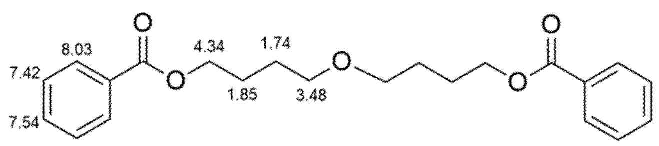
1d

with reference to the $^1H$ NMR of the above substances 1a and 1d, in the copolymerization product of dimer(1,4-butanediol), adipic acid (similar to 1a), and terephthalic acid (similar to 1d), the hydrogen atoms in the $CH_2$ unit linked to oxygen atom of the ether bond appeared nearby 3.40 ppm and 3.48 ppm.

To further validate the $^1H$ NMR peak position of dimer(1,4-butanediol) in the PBAT copolyester, $^1H$ NMR was

tested by taking the PBAT copolyester obtained after dimer(1,4-butanediol) is intentionally added in Example 8.1, thereby obtaining the $^1$H NMR (as shown in FIG. 2) of nearby peaks of hydrogen atoms in $CH_2$ linked to the oxygen atom of the ether bond in the product obtained after dimer(1,4-butanediol) is polymerized to the PBAT copolyester. This shows that the peaks nearby 3.40 ppm and 3.48 ppm are indeed identical to what we predicted above.

It can be thus calculated by FIG. 2 that based on the total molar weight of the first component A (diacid), the molar content Xc of the repeating unit $-CH_2CH_2CH_2CH_2-O-$ in the third component C is as follows:

$$X_C = \frac{\frac{I_1 + I_{1'} + I_2 + I_{2'}}{2}}{\frac{I_T + I_A}{4}} \times 100\% = 2\frac{I_1 + I_{1'} + I_2 + I_{2'}}{I_T + I_A} \times 100\% \quad (1)$$

where,

$I_1$ and $I_{1'}$ are integral areas of the peaks of the 2 hydrogen atoms in $-CH_2-$ linked to the oxygen atom of the ether bond on the dimer(1,4-butanediol) repeating unit adjacent to terephthalic acid;
$I_2$ and $I_{2'}$ are integral areas of the peaks of the 2 hydrogen atoms in $-CH_2-$ linked to the oxygen atom of the ether bond in the dimer(1,4-butanediol) repeating unit adjacent to adipic acid;
$I_T$ is an integral area of the 4 hydrogen atoms on the benzene ring of the repeating unit of terephthalic acid;
$I_A$ is an integral area of the 4 hydrogen atoms on the two $-CH_2-$ linked to carbonyl in the repeating unit of adipic acid;

The molar content of the repeating unit $-CH_2CH_2CH_2CH_2-O-$ in the third component C of other PBATs is also obtained by the similar method.

Viscosity number of the semi-aromatic polyester:
The viscosity number was determined in a phenol/o-dichlorobenzene solution having a weight ratio of 1:1 in a 25±0.05°C thermostatic water bath in accordance with the provision of GB/T 17931-1999; the sample concentration was 5 mg/ml.

Color of the semi-aromatic polyester: the pelletized and dried sample was taken and tested in accordance with the provision of GB/T 14190-2017 5.5.2 Method B (Dry method). Hunter Lab, L, a, and b values were obtained via the test and Hunter whiteness was defined as follows:

$$WH= 100-[(100-L)^2+a^2+b^2]^{1/2}$$

The greater the WH is, the better the sample color is.

Carboxyl group content:

Acid value AN (mg KOH/g) was first determined according to the DIN EN 12634 in October 1998, and then the carboxyl group content (mmol/kg)=(AN/56)×$10^3$. The solvent mixture used includes 1 part by volume of DMSO, 8 parts by volume of isopropanol, and 7 parts by volume of toluene, in a volume of 100 ml. 3-6 g of semi-aromatic polyester were taken and heated up to 70°C such that all the polymers were totally dissolved to a clean solution. During the titration process, the solution temperature was kept 60-70°C to avoid the precipitation of the polymer. The titrating solution is selected from tetrabutylammonium hydroxide instead of highly-toxic tetramethylammonium hydroxide. Meanwhile, to prevent the mixed solvent from absorbing the $CO_2$ in the art to affect the volume of the titrating solution consumed by the blank solvent, when the volume of the titrating solution consumed by the blank solvent is determined, the blank solvent should be heated up to 70°C and then kept for 0.5 h before the blank solvent is titrated.

30-day weight retention rate:

The biodegradation test of the semi-aromatic polyester is performed by reference to the test of GB/T 19277-2003. The semi-aromatic polyester test sample was first pressed to a film having a thickness of 0.10 mm, and then cut into a 1.2 cm×2.0 cm sample sheet; the sample weight was denoted as $a_0$ at this time. The sample sheet was then embedded into composting soil and put to an incubator; the composting soil was the city compost after being aerated for 56-70 d and sieved; the experimental temperature was kept at (58±2)°C, 30 d later, the composted sample sheet was taken out, washed, dried and weighed; the sample weight was denoted as $a_1$ at this time. The 30-day weight retention rate= $a_1/a_0$×100%. The higher the 30-day weight retention rate is, the more difficult the material degradation is; and the lower

the 30-day weight retention rate is, the faster the material degradation rate is. Based on the practical use, the 30-day weight retention rate is within a range of 50-60% better, and the higher the retention rate is, the better the degradation property is within such a range. When the 30-day weight retention rate is greater than 65%, the degradation property is too poor, when it is lower than 45%, degradation is too fast.

## Example 1

S1: an assembled apparatus (a process column connected to an esterification reactor + a short-path distiller) as shown in FIG. 3 was used; 437 kg/h of terephthalic acid, 437 kg/h of adipic acid, 760 kg/h of fresh 1,4-butanediol, 253 kg/h of recovered high-purity1,4-butanediol (purity: 99.2%, derived from the bottom of the short-path distiller in FIG. 3), 1.15 kg/h of glycerol and 0.506 kg/h of tetrabutyl orthotitanate were physically mixed in an esterification reactor at room temperature, and then the mixture was subjected to esterification reaction for 60-120 min at 240°C and 0.45 bar, to obtain an esterification product AB.

S2: the esterification product AB entered a vertical-stirred full-mixed reactor after through a static mixer and was heated up to 260°C, and the pressure was 0.3 bar; 0.276 kg/h of tetrabutyl orthotitanate were added to the reactor; when the pressure reduced to 100 mbar, most of the excessive 1,4-butanediol were distilled off. The reaction time was 60-120; at this time, the reaction product achieved a viscosity number 23 ml/g as determined in a phenol/o-dichlorobenzene solution having a weight ratio of 1:1 in a 25±0.05°C thermostatic water bath as defined in GB/T 17931-1999.

S3: 0.23 kg/h of phosphorous acid were added to the reaction mixture, meanwhile, the reaction mixture was transferred to a final polycondensation kettle for further polycondensation for 60-80 h at 260°C and a pressure of 1 mbar; the remaining excessive 1,4-butanediol and other by-products were distilled off; afterwards, the obtained product was granulated by an underwater granulator and dried to obtain the final product polyester. The performance results are shown in Table 1.

## Example 2

S1: an assembled apparatus (a process column connected to an esterification reactor + a short-path distiller) as shown in FIG. 3 was used; 437 kg/h of terephthalic acid, 437 kg/h of adipic acid, 760 kg/h of fresh 1,4-butanediol, 25 kg/h of recovered coarse 1,4-butanediol (purity: 98.5%, derived from the bottom of the process column in FIG. 3), 228 kg/h of recovered high-purity 1,4-butanediol (purity: 99.3%, derived from the bottom of the short-path distiller in FIG. 3), 1.15 kg/h of glycerol and 0.506 kg/h of tetrabutyl orthotitanate were physically mixed in the esterification reactor at room temperature, and then the mixture was subjected to esterification reaction for 60-120 min at 240°C and 0.45 bar, to obtain an esterification product AB.

S2: the esterification product AB entered a vertical-stirred full-mixed reactor after through a static mixer and was heated up to 260°C, and the pressure was 0.3 bar; 0.276 kg/h of tetrabutyl orthotitanate were added to the reactor; when the pressure reduced to 100 mbar, most of the excessive 1,4-butanediol were distilled off. The reaction time was 60-120; at this time, the reaction product achieved a viscosity number 26 ml/g as determined in a phenol/o-dichlorobenzene solution having a weight ratio of 1:1 in a 25±0.05°C thermostatic water bath as defined in GB/T 17931-1999.

S3: 0.23 kg/h of phosphorous acid were added to the reaction mixture, meanwhile, the reaction mixture was transferred to a final polycondensation kettle for further polycondensation for 60-80 h at 260°C and a pressure of 1 mbar; the remaining excessive 1,4-butanediol and other by-products were distilled off; afterwards, the obtained product was granulated by an underwater granulator and dried to obtain the final product polyester. The performance results are shown in Table 1.

## Example 3

S1: an assembled apparatus (a process column connected to an esterification reactor + a short-path distiller) as shown in FIG. 3 was used; 437 kg/h of terephthalic acid, 437 kg/h of adipic acid, 760 kg/h of fresh 1,4-butanediol, 51 kg/h of recovered coarse 1,4-butanediol (purity: 98.6%, derived from the bottom of the process column in FIG. 3), 202 kg/h of recovered high-purity 1,4-butanediol (purity: 99.3%, derived from the bottom of the short-path distiller in FIG. 3), 1.15 kg/h of glycerol and 0.506 kg/h of tetrabutyl orthotitanate were physically mixed in the esterification reactor at room temperature, and then the mixture was subjected to esterification reaction for 60-120 min at 240°C and 0.45 bar, to obtain an esterification product AB.

S2: the esterification product AB entered a vertical-stirred full-mixed reactor after through a static mixer and was heated up to 260°C, and the pressure was 0.3 bar; 0.276 kg/h of tetrabutyl orthotitanate were added to the reactor; when the pressure reduced to 100 mbar, most of the excessive 1,4-butanediol were distilled off. The reaction time was 60-120; at this time, the reaction product achieved a viscosity number 29 ml/g as determined in a phenol/o-dichlorobenzene solution having a weight ratio of 1:1 in a 25±0.05°C thermostatic water bath as defined in GB/T 17931-1999.

S3: 0.23 kg/h of phosphorous acid were added to the reaction mixture, meanwhile, the reaction mixture was transferred to a final polycondensation kettle for further polycondensation for 60-80 h at 260°C and a pressure of 1 mbar; the remaining excessive 1,4-butanediol and other by-products were distilled off; afterwards, the obtained product was granulated by an underwater granulator and dried to obtain the final product polyester. The performance results are shown in Table 1.

## Example 4

S1: an assembled apparatus (a process column connected to an esterification reactor + a short-path distiller) as shown in FIG. 3 was used; 437 kg/h of terephthalic acid, 437 kg/h of adipic acid, 760 kg/h of fresh 1,4-butanediol, 101 kg/h of recovered coarse 1,4-butanediol (purity: 98.7%, derived from the bottom of the process column in FIG. 3), 152 kg/h of recovered high-purity 1,4-butanediol (purity: 99.4%, derived from the bottom of the short-path distiller in FIG. 3), 1.15 kg/h of glycerol and 0.506 kg/h of tetrabutyl orthotitanate were physically mixed in the esterification reactor at room temperature, and then the mixture was subjected to esterification reaction for 60-120 min at 240°C and 0.45 bar, to obtain an esterification product AB.

S2: the esterification product AB entered a vertical-stirred full-mixed reactor after through a static mixer and was heated up to 260°C, and the pressure was 0.3 bar; 0.276 kg/h of tetrabutyl orthotitanate were added to the reactor; when the pressure reduced to 100 mbar, most of the excessive 1,4-butanediol were distilled off. The reaction time was 60-120; at this time, the reaction product achieved a viscosity number 21 ml/g as determined in a phenol/o-dichlorobenzene solution having a weight ratio of 1:1 in a 25±0.05°C thermostatic water bath as defined in GB/T 17931-1999.

S3: 0.23 kg/h of phosphorous acid were added to the reaction mixture, meanwhile, the reaction mixture was transferred to a final polycondensation kettle for further polycondensation for 60-80 h at 260°C and a pressure of 1 mbar; the remaining excessive 1,4-butanediol and other by-products were distilled off; afterwards, the obtained product was granulated by an underwater granulator and dried to obtain the final product polyester. The performance results are shown in Table 1.

## Example 5

S1: an assembled apparatus (a process column connected to an esterification reactor + a short-path distiller) as shown in FIG. 3 was used; 437 kg/h of terephthalic acid, 605 kg/h of decanedioic acid, 760 kg/h of fresh 1,4-butanediol, 25 kg/h of recovered coarse 1,4-butanediol (purity: 98.4%, derived from the bottom of the process column in FIG. 3), 228 kg/h of recovered high-purity butanediol (purity: 99.4%, derived from the bottom of the short-path distiller in FIG. 3), 1.15 kg/h of glycerol and 0.506 kg/h of tetrabutyl orthotitanate were physically mixed in the esterification reactor at room temperature, and then the mixture was subjected to esterification reaction for 60-120 min at 240°C and 0.45 bar, to obtain an esterification product AB.

S2: the esterification product AB entered a vertical-stirred full-mixed reactor after through a static mixer and was heated up to 260°C, and the pressure was 0.3 bar; 0.276 kg/h of tetrabutyl orthotitanate were added to the reactor; when the pressure reduced to 100 mbar, most of the excessive 1,4-butanediol were distilled off. The reaction time was 60-120; at this time, the reaction product achieved a viscosity number 30 ml/g as determined in a phenol/o-dichlorobenzene solution having a weight ratio of 1:1 in a 25±0.05°C thermostatic water bath as defined in GB/T 17931-1999.

S3: 0.23 kg/h of phosphorous acid were added to the reaction mixture, meanwhile, the reaction mixture was transferred to a final polycondensation kettle for further polycondensation for 60-80 h at 260°C and a pressure of 1 mbar; the remaining excessive 1,4-butanediol and other by-products were distilled off; afterwards, the obtained product was granulated by an underwater granulator and dried to obtain the final product polyester. The performance results are shown in Table 1.

## Example 6

S1: an assembled apparatus (a process column connected to an esterification reactor + a short-path distiller) as shown in FIG. 3 was used; 437 kg/h of terephthalic acid, 437 kg/h of adipic acid, 760 kg/h of fresh 1,4-butanediol, 25 kg/h of recovered coarse 1,4-butanediol (purity: 98.7%, derived from the bottom of the process column in FIG. 3), 228 kg/h of recovered high-purity 1,4-butanediol (purity: 99.2%, derived from the bottom of the short-path distiller in FIG. 3), and 0.506 kg/h of tetrabutyl orthotitanate were physically mixed in the esterification reactor at room temperature, and then the mixture was subjected to esterification reaction for 60-120 min at 240°C and 0.45 bar, to obtain an esterification product AB.

S2: the esterification product AB entered a vertical-stirred full-mixed reactor after through a static mixer and was heated up to 260°C, and the pressure was 0.3 bar; 0.276 kg/h of tetrabutyl orthotitanate were added to the reactor; when the pressure reduced to 100 mbar, most of the excessive 1,4-butanediol were distilled off. The reaction time was

60-120; at this time, the reaction product achieved a viscosity number 26 ml/g as determined in a phenol/o-dichlorobenzene solution having a weight ratio of 1:1 in a 25±0.05°C thermostatic water bath as defined in GB/T 17931-1999.

S3: 0.23 kg/h of phosphorous acid were added to the reaction mixture, meanwhile, the reaction mixture was transferred to a final polycondensation kettle for further polycondensation for 60-80 h at 260°C and a pressure of 1 mbar; the remaining excessive 1,4-butanediol and other by-products were distilled off; afterwards, the obtained product was granulated by an underwater granulator and dried to obtain the final product polyester. The performance results are shown in Table 1.

## Example 7

S1: an assembled apparatus (a process column connected to an esterification reactor + a short-path distiller) as shown in FIG. 3 was used; 437 kg/h of terephthalic acid, 325 kg/h of adipic acid, 656 kg/h of fresh 1,4-butanediol, 22 kg/h of recovered coarse 1,4-butanediol (purity: 98.6%, derived from the bottom of the process column in FIG. 3), 197 kg/h of recovered high-purity 1,4-butanediol (purity: 99.3%, derived from the bottom of the short-path distiller in FIG. 3), 0.994 kg/h of glycerol and 0.446 kg/h of tetrabutyl orthotitanate were physically mixed in the esterification reactor at room temperature, and then the mixture was subjected to esterification reaction for 60-120 min at 240°C and 0.45 bar, to obtain an esterification product AB.

S2: the esterification product AB entered a vertical-stirred full-mixed reactor after through a static mixer and heated up to 260°C, and the pressure was 0.3 bar; 0.243 kg/h of tetrabutyl orthotitanate were added to the reactor; when the pressure reduced to 100 mbar, most of the excessive 1,4-butanediol were distilled off. The reaction time was 60-120; at this time, the reaction product achieved a viscosity number 29 ml/g as determined in a phenol/o-dichlorobenzene solution having a weight ratio of 1:1 in a 25±0.05°C thermostatic water bath as defined in GB/T 17931-1999.

S3: 0.20 kg/h of phosphorous acid were added to the reaction mixture, meanwhile, the reaction mixture was transferred to a final polycondensation kettle for further polycondensation for 60-80 h at 260°C and a pressure of 1 mbar; the remaining excessive 1,4-butanediol and other by-products were distilled off; afterwards, the obtained product was granulated by an underwater granulator and dried to obtain the final product polyester. The performance results are shown in Table 1.

## Comparative Example 1

S1: a traditional single-process column esterification reactor as shown in FIG. 4 was used; 437 kg/h of terephthalic acid, 437 kg/h of adipic acid, 760 kg/h of fresh 1,4-butanediol, 253 kg/h of recovered coarse 1,4-butanediol (purity: 98.5%), 1.15 kg/h of glycerol and 0.506 kg/h of tetrabutyl orthotitanate were physically mixed in the esterification reactor at room temperature, and then the mixture was subjected to esterification reaction for 60-120 min at 240°C and 0.45 bar, to obtain an esterification product AB.

S2: the esterification product AB entered a vertical-stirred full-mixed reactor after through a static mixer and was heated up to 260°C, and the pressure was 0.3 bar; 0.276 kg/h of tetrabutyl orthotitanate were added to the reactor; when the pressure reduced to 100 mbar, most of the excessive 1,4-butanediol were distilled off. The reaction time was 60-120; at this time, the reaction product achieved a viscosity number 22 ml/g as determined in a phenol/o-dichlorobenzene solution having a weight ratio of 1:1 in a 25±0.05°C thermostatic water bath as defined in GB/T 17931-1999.

S3: 0.23 kg/h of phosphorous acid were added to the reaction mixture, meanwhile, the reaction mixture was transferred to a final polycondensation kettle for further polycondensation for 60-80 h at 260°C and a pressure of 1 mbar; the remaining excessive 1,4-butanediol and other by-products were distilled off; afterwards, the obtained product was granulated by an underwater granulator and dried to obtain the final product polyester. The performance results are shown in Table 1.

## Comparative Example 2

S1: a traditional single-process column esterification reactor as shown in FIG. 4 was used; the reflux valve at the bottom of the process column was turned off to avoid that the recovered 1,4-butanediol entered the esterification reactor. 437 kg/h of terephthalic acid, 437 kg/h of adipic acid, 1013 kg/h of fresh 1,4-butanediol (fresh 1,4-butanediol was used without any recovered 1,4-butanediol), 1.15 kg/h glycerol, and 0.506 kg/h of tetrabutyl orthotitanate were physically mixed in the esterification reactor at room temperature, and then the mixture was subjected to esterification reaction for 60-120 min at 240°C and 0.45 bar, to obtain an esterification product AB;

S2: the esterification product AB entered a vertical-stirred full-mixed reactor after through a static mixer and was heated up to 260°C, and the pressure was 0.3 bar; 0.276 kg/h of tetrabutyl orthotitanate were added to the reactor; when the pressure reduced to 100 mbar, most of the excessive 1,4-butanediol were distilled off. The reaction time was 60-120; at this time, the reaction product achieved a viscosity number 24 ml/g as determined in a phenol/o-dichlorobenzene solution having a weight ratio of 1:1 in a 25±0.05°C thermostatic water bath as defined in GB/T 17931-1999.

S3: 0.23 kg/h of phosphorous acid were added to the reaction mixture, meanwhile, the reaction mixture was transferred to a final polycondensation kettle for further polycondensation for 60-80 h at 260°C and a pressure of 1 mbar; the remaining excessive 1,4-butanediol and other by-products were distilled off; afterwards, the obtained product was granulated by an underwater granulator and dried to obtain the final product polyester. The performance results are shown in Table 1.

**Comparative Example 3**

S1: an assembled apparatus (a process column connected to an esterification reactor + a short-path distiller) as shown in FIG. 3 was used; 437 kg/h of terephthalic acid, 165 kg/h of adipic acid, 508 kg/h of fresh 1,4-butanediol, 17 kg/h of recovered coarse 1,4-butanediol (purity: 98.5%, derived from the bottom of the process column in FIG. 3), 152 kg/h of recovered high-purity 1,4-butanediol (purity: 99.3%, derived from the bottom of the short-path distiller in FIG. 3), 0.77 kg/h of glycerol and 0.337 kg/h of tetrabutyl orthotitanate were physically mixed in the esterification reactor at room temperature, and then the mixture was subjected to esterification reaction for 60-120 min at 240°C and 0.45 bar, to obtain an esterification product AB.

S2: the esterification product AB entered a vertical-stirred full-mixed reactor after through a static mixer and was heated up to 260°C, and the pressure was 0.3 bar; 0.184 kg/h of tetrabutyl orthotitanate were added to the reactor; when the pressure reduced to 100 mbar, most of the excessive 1,4-butanediol were distilled off. The reaction time was 60-120; at this time, the reaction product achieved a viscosity number 29 ml/g as determined in a phenol/o-dichlorobenzene solution having a weight ratio of 1:1 in a 25±0.05°C thermostatic water bath as defined in GB/T 17931-1999.

S3: 0.153 kg/h of phosphorous acid were added to the reaction mixture, meanwhile, the reaction mixture was transferred to a final polycondensation kettle for further polycondensation for 60-80 h at 260°C and a pressure of 1 mbar; the remaining excessive 1,4-butanediol and other by-products were distilled off; afterwards, the obtained product was granulated by an underwater granulator and dried to obtain the final product polyester. The performance results are shown in Table 1.

**Comparative Example 4**

S1: an assembled apparatus (a process column connected to an esterification reactor + a short-path distiller) as shown in FIG. 3 was used; 437 kg/h of terephthalic acid, 897 kg/h of adipic acid, 1185 kg/h of fresh 1,4-butanediol, 40 kg/h of recovered coarse 1,4-butanediol (purity: 98.4%, derived from the bottom of the process column in FIG. 3), 356 kg/h of recovered high-purity 1,4-butanediol (purity: 99.5%, derived from the bottom of the short-path distiller in FIG. 3), 1.791 kg/h of glycerol and 0.796 kg/h of tetrabutyl orthotitanate were physically mixed in the esterification reactor at room temperature, and then the mixture was subjected to esterification reaction for 60-120 min at 240°C and 0.45 bar, to obtain an esterification product AB.

S2: the esterification product AB entered a vertical-stirred full-mixed reactor after through a static mixer and was heated up to 260°C, and the pressure was 0.3 bar; 0.434 kg/h of tetrabutyl orthotitanate were added to the reactor; when the pressure reduced to 100 mbar, most of the excessive 1,4-butanediol were distilled off. The reaction time was 60-120; at this time, the reaction product achieved a viscosity number 23 ml/g as determined in a phenol/o-dichlorobenzene solution having a weight ratio of 1:1 in a 25±0.05°C thermostatic water bath as defined in GB/T 17931-1999.

S3: 0.36 kg/h of phosphorous acid were added to the reaction mixture, meanwhile, the reaction mixture was transferred to a final polycondensation kettle for further polycondensation for 60-80 h at 260°C and a pressure of 1 mbar; the remaining excessive 1,4-butanediol and other by-products were distilled off; afterwards, the obtained product was granulated by an underwater granulator and dried to obtain the final product polyester. The performance results are shown in Table 1.

Table 1 Performance test results of the Examples 1-7 and Comparative Examples 1-4

| | Example 1 | Example 2 | Example 3 | Example 4 | Example 5 | Example 6 | Example 7 | Comparative Example 1 | Comparative Example2 | Comparative Example 3 | Comparative Example 4 |
|---|---|---|---|---|---|---|---|---|---|---|---|
| Glycerol | Present | Present | Present | Present | Present | Absent | Present | Present | Present | Present | Present |

(continued)

| | Example 1 | Example 2 | Example 3 | Example 4 | Example 5 | Example 6 | Example 7 | Comparative Example 1 | Comparative Example2 | Comparative Example 3 | Comparative Example 4 |
|---|---|---|---|---|---|---|---|---|---|---|---|
| Terephthalic acid/mol% | 46.8 | 46.9 | 46.7 | 46.6 | 46.9 | 46.5 | 54.4 | 46.7 | 46.9 | 70.2 | 29.8 |
| Adipic acid/mol% | 53.2 | 53.1 | 53.3 | 53.4 | | 53.5 | 45.6 | 53.3 | 53.1 | 29.8 | 70.2 |
| Decanedioic acid/mol% | | | | | 53.1 | | | | | | |
| *Molar content ($X_C$/mol%) of the repeating unit $-CH_2CH_2CH_2CH_2-O-$* | 0.061 | 0.089 | 0.15 | 0.33 | 0.086 | 0.081 | 0.076 | 0.67 | 0.022 | 0.083 | 0.081 |
| Hunter whiteness | 83.1 | 82.3 | 79.8 | 75.4 | 80.9 | 82.2 | 81.8 | 63.3 | 83.5 | 81.6 | 82.2 |
| Carboxyl group/ mmol/kg | 15 | 17 | 16 | 18 | 18 | 17 | 16 | 15 | 17 | 19 | 15 |
| Viscosity number/ml/g | 182 | 191 | 188 | 187 | 183 | 164 | 190 | 183 | 188 | 191 | 183 |
| 30-day weight retention rate/% | 57 | 57 | 56 | 55 | 51 | 53 | 61 | 54 | 67 | 86 | 31 |

As can be seen from Examples 1-4, when the molar content of the repeating unit $-CH_2CH_2CH_2CH_2-O-$ in the third component C is 0.05-0.30 mol%, the whiteness is higher and the 30-day weight retention rate is better; in Example 5, since adipic acid is replaced by decanedioic acid, the degradation rate is relatively fast (the 30-day weight retention rate decreases); in Example 6, both the viscosity number and 30-day weight retention rate decrease to a certain extent due to the absence of glycerol; in Example 7, with a higher content of terephthalic acid, the 30-day weight retention rate increases slightly, but is still within the commercially acceptable range.

In Comparative Example 1, the molar content of the repeating unit $-CH_2CH_2CH_2CH_2-O-$ in the third component C of the obtained resin exceeds the range, leading to poor color of the resin. Similarly, in the resin obtained in Comparative Example 2, the molar content of the repeating unit $-CH_2CH_2CH_2CH_2-O-$ in the third component C is too low; the resin has a fine color, but has a too high 30-day weight retention rate; moreover, the excessive 1,4-butanediol may not be recovered; the running cost of the production line is expensive, and thus there is no commercial value. In Comparative Example 3, the content of terephthalic acid is too high, and the degradation property of the resin is poor (the 30-day weight retention rate is too high); and in Comparative Example 4, the content of terephthalic acid is too low, and the degradation of the resin is too fast (the 30-day weight retention rate is too low).

## Example 8

Because the recovered 1,4-butanediol may contain multiple products obtained after the polymerization of 1,4-butanediol, e.g., dimer(1,4-butanediol) and poly(1,4-butanediol), to further verify the correlation between the PBAT resin color and each of these products, the correlation between dimer(1,4-butanediol)/poly(1,4-butanediol) and the resin color was studied. The raw materials 1,4-butanediol used in this example were all the same fresh butanediol having a purity of not less than 99.7%.

As can be seen the reference (Alexander, K.; Schniepp, L. E., 4,4'-Dichlorodibutyl Ether and its Derivatives from Tetrahydrofuran. J. Am. Chem. Soc. 1948, 70(5): 1839-1842.), dimer(1,4-butanediol) was synthesized; poly(1,4-butanediol) having the molecular weight of 1000 and 650 were purchased from Sigma-Aldrich.

**Example 8.1**

Under the protection of high-purity nitrogen, 2.36 kg of terephthalic acid, 2.36 kg of adipic acid, 4.38 kg of 1,4-butanediol, 50 g of dimer(1,4-butanediol), 6.2 g of glycerol, and 4.2 g of titanium tetrabutoxide were put to a reaction kettle, heated up to 220-240°C and kept for 120 min. 1.25 g of phosphorous acid were then put to the reaction kettle. The pressure in the reaction kettle was reduced 50 Pa below within 30-60 min, and then the above materials were subjected to reaction for 60-120 min at 220-260°C. High-purity nitrogen was introduced into the reaction kettle after stopping stirring, and the resin was squeezed out of the reaction kettle, and water granulated to obtain the polyester product. The performance results are shown in Table 2.

**Example 8.2** Under the protection of high-purity nitrogen, 2.36 kg of terephthalic acid, 2.36 kg of adipic acid, 4.38 kg of 1,4-butanediol, 25 g of dimer(1,4-butanediol), 6.2 g of glycerol, and 4.2 g of titanium tetrabutoxide were put to a reaction kettle, heated up to 220-240°C and kept for 120 min. 1.25 g of phosphorous acid were then put to the reaction kettle. The pressure in the reaction kettle was reduced 50 Pa below within 30-60 min, and then the above materials were subjected to reaction for 60-120 min at 220-260°C. High-purity nitrogen was introduced into the reaction kettle after stopping stirring, and the resin was squeezed out of the reaction kettle, and water granulated to obtain the polyester product. The performance results are shown in Table 2.

**Example 8.3**

Under the protection of high-purity nitrogen, 2.36 kg of terephthalic acid, 2.36 kg of adipic acid, 4.38 kg of 1,4-butanediol, 10 g of dimer(1,4-butanediol), 6.2 g of glycerol, and 4.2 g of titanium tetrabutoxide were put to a reaction kettle, heated up to 220-240°C and kept for 120 min. 1.25 g of phosphorous acid were then put to the reaction kettle. The pressure in the reaction kettle was reduced 50 Pa below within 30-60 min, and then the above materials were subjected to reaction for 60-120 min at 220-260°C. High-purity nitrogen was introduced into the reaction kettle after stopping stirring, and the resin was squeezed out of the reaction kettle, and water granulated to obtain the polyester product. The performance results are shown in Table 2.

**Example 8.4**

Under the protection of high-purity nitrogen, 2.36 kg of terephthalic acid, 2.36 kg of adipic acid, 4.38 kg of 1,4-butanediol, 5 g of dimer(1,4-butanediol), 6.2 g of glycerol, and 4.2 g of titanium tetrabutoxide were put to a reaction kettle, heated up to 220-240°C and kept for 120 min. 1.25 g of phosphorous acid were then put to the reaction kettle. The pressure in the reaction kettle was reduced 50 Pa below within 30-60 min, and then the above materials were subjected to reaction for 60-120 min at 220-260°C. High-purity nitrogen was introduced into the reaction kettle after stopping stirring, and the resin was squeezed out of the reaction kettle, and water granulated to obtain the polyester product. The performance results are shown in Table 2.

**Example 8.5**

Under the protection of high-purity nitrogen, 2.36 kg of terephthalic acid, 2.36 kg of adipic acid, 4.38 kg of 1,4-butanediol, 6.2 g of glycerol, and 4.2 g of titanium tetrabutoxide were put to a reaction kettle, heated up to 220-240°C and kept for 120 min. 1.25 g of phosphorous acid were then put to the reaction kettle. The pressure in the reaction kettle was reduced 50 Pa below within 30-60 min, and then the above materials were subjected to reaction for 60-120 min at 220-260°C. High-purity nitrogen was introduced into the reaction kettle after stopping stirring, and the resin was squeezed out of the reaction kettle, and water granulated to obtain the polyester product. The performance results are shown in Table 2.

**Example 8.6**

Under the protection of high-purity nitrogen, 2.36 kg of terephthalic acid, 2.36 kg of adipic acid, 4.38 kg of 1,4-butanediol, 4.6 g of poly(1,4-butanediol) (Sigma-Aldrich, Mn: about 1000), 6.2 g of glycerol, and 4.2 g of titanium tetrabutoxide were put to a reaction kettle, heated up to 220-240°C and kept for 120 min. 1.25 g of phosphorous acid were then put to the reaction kettle. The pressure in the reaction kettle was reduced 50 Pa below within 30-60 min, and then the above materials were subjected to reaction for 60-120 min at 220-260°C. High-purity nitrogen was introduced into the reaction kettle after stopping stirring, and the resin was squeezed out of the reaction kettle, and water granulated to obtain the polyester product. The performance results are shown in Table 2.

**Example 8.7**

Under the protection of high-purity nitrogen, 2.36 kg of terephthalic acid, 2.36 kg of adipic acid, 4.38 kg of 1,4-butanediol, 4.6 g of poly(1,4-butanediol) (Sigma-Aldrich, Mn: about 650), 6.2 g of glycerol, and 4.2 g of titanium tetrabutoxide were put to a reaction kettle, heated up to 220-240°C and kept for 120 min. 1.25 g of phosphorous acid were then put to the reaction kettle. The pressure in the reaction kettle was reduced 50 Pa below within 30-60 min, and then the above materials were subjected to reaction for 60-120 min at 220-260°C. High-purity nitrogen was introduced into the reaction kettle after stopping stirring, and the resin was squeezed out of the reaction kettle, and water granulated to obtain the polyester product. The performance results are shown in Table 2.

Table 2

| | Examp le 8.1 | Examp le 8.2 | Examp le 8.3 | Examp le 8.4 | Examp le 8.5 | Examp le 8.6 | Examp le 8.7 |
|---|---|---|---|---|---|---|---|
| Feeding amount of the dimer (1,4-butanediol)/g | 50 | 25 | 10 | 5 | | | |
| Feeding amount of the poly(1,4-butanediol)/g | | | | | | 4.6 | 4.6 |
| Molecular weight of the dimer (1,4-butanediol) | 162 | 162 | 162 | 162 | | | |
| Molecular weight of the poly (1,4-butanediol) | | | | | | 1000 | 650 |
| Glycerol | Presen t | Presen t | Presen t | Presen t | Presen t | Presen t | Presen t |
| Terephthalic acid/mol% | 46.6 | 46.9 | 46.8 | 46.7 | 46.9 | 46.8 | 46.6 |
| Adipic acid/mol% | 53.4 | 53.1 | 53.2 | 53.3 | 53.1 | 53.2 | 53.4 |
| *Molar content* (Xc/mol%) *of the repeating unit* $-CH_2CH_2CH_2CH_2-O-$ | 2.05 | 1.03 | 0.43 | 0.23 | 0.025 | 0.24 | 0.25 |
| Hunter whiteness | 50.2 | 55.4 | 68.2 | 77.5 | 83.3 | 83.2 | 82.9 |
| Carboxyl group/mmol/kg | 17 | 18 | 19 | 18 | 16 | 19 | 18 |
| Viscosity number/ml/g | 188 | 184 | 189 | 185 | 180 | 189 | 191 |

FIG. 5 shows $^1H$ NMR of nearby peaks of hydrogen atoms in $CH_2$ linked to the oxygen atom of the ether bond in a polymerization product obtained by adding poly(1,4-butanediol) (the number of the repeating units $-CH_2CH_2CH_2CH_2-O-$ is about 14) having a molecular weight of 1000 in Example 8.6. Because the related peaks of the dimer(1,4-butanediol) generated from the polymerization product itself and the additionally added poly(1,4-butanediol) having a molecular weight of 1000 overlapped nearby 3.4 ppm, only the total content of the repeating units $-CH_2CH_2CH_2CH_2-O-$ in the polymerization product may be calculated:

$$X_C = \frac{\frac{I_1 + I_{1'} + I_2 + I_{2'}}{2} + \frac{I_3}{4}}{\frac{I_T + I_A}{4}} = \frac{2(I_1 + I_{1'} + I_2 + I_{2'}) + I_3}{I_T + I_A} \qquad (2)$$

where,

$I_1$ and $I_1$ are integral areas of the peaks of the hydrogen atoms in $-CH_2-$ linked to the oxygen atom of the ether bond in the repeating unit of poly(1,4-butanediol) adjacent to terephthalic acid;
$I_2$ and $I_{2'}$ are integral areas of the peaks of the hydrogen atoms in $-CH_2-$ linked to the oxygen atom of the ether bond in the repeating unit of poly(1,4-butanediol) adjacent to adipic acid;
$I_3$ denotes an integral area of the peaks of the hydrogen atoms in $-CH_2-$ linked to the oxygen atom of the ether bond

in the repeating unit of poly(1,4-butanediol) not adjacent to terephthalic acid and adipic acid;
$I_T$ is an integral area of the 4 hydrogen atoms on the benzene ring of the repeating unit of terephthalic acid;
$I_A$ is an integral area of the 4 hydrogen atoms on the two $-CH_2-$ linked to carbonyl in the repeating unit of adipic acid; however, the three peaks of hydrogen atoms 2, 2', and 3 overlapped. Therefore, the areas of the peaks 2, 2', and 3 in the overlapped peak must be calculated separately, and then $X_C$ is calculated by the formula (2).

Given that $I_1$ and $I_{1'}$ may also reflect the ratio of the repeating unit of terephthalic acid; $I_2$ and $I_{2'}$ may also reflect the ratio of the repeating unit of adipic acid, we obtain the following correlation:

$$\frac{\frac{I_T}{4}}{\frac{I_A}{4}} = \frac{\frac{I_1 + I_{1'}}{2}}{\frac{I_2 + I_{2'}}{2}} \quad (3)$$

The formula (3) is simplified to obtain the following:

$$I_2 + I_{2'} = \frac{I_A}{I_T}(I_1 + I_{1'}) \quad (4)$$

Additionally,

$$I_3 = I_{2\&2'\&3} - (I_2 + I_{2'}) = I_{2\&2'\&3} - \frac{I_A}{I_T}(I_1 + I_{1'}) \quad (5)$$

The formulas (4) and (5) are put into the formula (2) to obtain the following:

$$X_C = \frac{2(\frac{I_A}{I_T} + 1)(I_1 + I_{1'}) + I_{2\&2'\&3} - \frac{I_A}{I_T}(I_1 + I_{1'})}{I_T + I_A} \times 100\% = \frac{(\frac{I_A}{I_T} + 2)(I_1 + I_{1'}) + I_{2\&2'\&3}}{I_T + I_A} \times 100\% \quad (6)$$

The formula (6) is, namely, the calculation formula of the molar content of the repeating unit $-CH_2CH_2CH_2CH_2-O-$ derived from all the poly(1,4-butanediol) (including the one generated by itself and the one added additionally) in the polymerization product, based on the total molar weight of the first component A (diacid).
As can be seen from the Examples 8.5-8.1 of Table 2, the resin color gets worse obviously with the increase of the dimer(1,4-butanediol) added. Meanwhile, the resin color is not obviously affected when other types of poly(1,4-butanediol) having a higher molecular weight (Examples 8.6 and 8.7) are added to the polymerization system. The data of Example 8 further indicates that the resin color is affected by dimer(1,4-butanediol), and the higher the content of the dimer(1,4-butanediol) is, the worse the resin color is.

## Claims

**1.** A semi-aromatic polyester, comprising repeating units derived from the following components:

a first component A, based on a total molar weight of the first component A, comprising:

a1) 35-65 mol%, and preferably 40-60 mol% of at least one aliphatic dicarboxylic acid, or an ester derivative thereof or an anhydride derivative thereof,
a2) 35-65 mol%, and preferably 40-60 mol% of at least one aromatic dicarboxylic acid, or an ester derivative thereof or an anhydride derivative thereof,

a second component B: 1,4-butanediol; and
a third component C: dimer(1,4-butanediol) having a molecular formula of HO-$CH_2CH_2CH_2CH_2$-O-$CH_2CH_2CH_2CH_2$-OH, wherein based on the total molar weight of the first component A, a molar content of a repeating unit -$CH_2CH_2CH_2CH_2$-O- in the third component C is 0.05-0.35 mol%.

**2.** The semi-aromatic polyester according to claim 1, wherein the component a1) is selected from one or more of oxalic acid, dimethyl oxalate, malonic acid, dimethyl malonate, succinic acid, dimethyl succinate, methylsuccinic acid, glutaric acid, dimethyl glutarate, bis(2-hydroxyethyl) glutarate, bis(3-hydroxypropyl)glutarate, bis(4-hydroxybutyl) glutarate, 2-methylglutaric acid, 3-methylglutaric acid, adipic acid, dimethyl adipate, bis(2-hydroxyethyl) adipate, bis(3-hydroxypropyl) adipate, bis(4-hydroxybutyl) adipate, 3-methyladipic acid, 2,2,5,5-tetramethyladipic acid, pimelic acid, suberic acid, azelaic acid, dimethyl azelate, decanedioic acid, 1,11-undecanedicarboxylic acid, 1,10-decanedicarboxylic acid, undecandioic acid, 1,12-dodecanedicarboxylic acid, hexadecanedioic acid, eicosandioic acid, tetracosandioic acid, dimer acid, or an ester derivative thereof or an anhydride derivative thereof, preferably, selected from one or more of succinic acid, adipic acid, decanedioic acid, 1,12-dodecanedicarboxylic acid, or an ester derivative or an anhydride derivative thereof, more preferably, one or two of adipic acid, decanedioic acid, or an ester derivative thereof or an anhydride derivative thereof, and most preferably, adipic acid, or an ester derivative thereof or an anhydride derivative thereof.

**3.** The semi-aromatic polyester according to claim 1 or 2, wherein the component a2) is selected from one or more of terephthalic acid, dimethyl terephthalate, bis(2-hydroxyethyl) terephthalate, bis(3-hydroxypropyl) terephthalate, bis(4-hydroxybutyl) terephthalate, isophthalic acid, dimethyl isophthalate, bis(2-hydroxyethyl) isophthalate, bis(3-hydroxypropyl) isophthalate, bis(4-hydroxybutyl) isophthalate, 2,6-naphthalenedicarboxylic acid, dimethyl 2,6-benzenedicarboxylate, 2,7-naphthalenedicarboxylic acid, dimethyl 2,7-benzenedicarboxylate, 3,4'-diphenylether dicarboxylic acid, dimethyl 3,4'-diphenylether dicarboxylate, 4,4'-diphenylether dicarboxylic acid, dimethyl 4,4'-diphenylether dicarboxylate, 3,4'-phenylthioether dicarboxylic acid, dimethyl 3,4'-phenylthioether dicarboxylate, 4,4'-phenylthioether dicarboxylic acid, dimethyl 4,4'-phenylthioether dicarboxylate, 3,4'-diphenylsulfone dicarboxylic acid, dimethyl 3,4'-diphenylsulfone dicarboxylate, 4,4'-diphenylsulfone dicarboxylic acid, dimethyl 4,4'-diphenylsulfone dicarboxylate, 3,4'-benzophenone dicarboxylic acid, dimethyl 3,4'-benzophenone dicarboxylate, 4,4'-benzophenone dicarboxylic acid, dimethyl 4,4'-benzophenone dicarboxylate, 1,4-naphthalenedicarboxylic acid, dimethyl 1,4-naphthalene dicarboxylate, 4,4'-methylenebis(benzoic acid), 4,4'-methylenebis(dimethyl benzoate), or an ester derivative thereof or an anhydride derivative thereof, and preferably terephthalic acid, or an ester derivative thereof or an anhydride derivative thereof.

**4.** The semi-aromatic polyester according to any one of claims 1-3, wherein based on the total molar weight of the first component A, the molar content of the repeating unit -$CH_2CH_2CH_2CH_2$-O- in the third component C is 0.05-0.30 mol%.

**5.** The semi-aromatic polyester according to any one of claims 1-4, further comprising a fourth component D, wherein the fourth component D is a compound comprising at least three functional groups, preferably a compound comprising three to six functional groups, and more preferably selected from one or more of tartaric acid, citric acid, malic acid, trimethylolpropane, trimethylolethane, pentaerythritol, polyether triol, glycerol, 1,3,5-benzenetricarboxylic acid, 1,2,4-benzenetricarboxylic acid, 1,2,4-benzenetricarboxylic anhydride, 1,2,4,5-benzenetetracarboxylic acid, and pyromellitic dianhydride, and preferably, trimethylolpropane, pentaerythritol, or glycerol;
preferably, based on the total molar weight of the first component A, the fourth component D has a content of 0.01-5.0 mol%, and further preferably 0.02-2.0 mol%.

**6.** The semi-aromatic polyester according to any one of claims 1-5, further comprising a fifth component E as a chain extender, wherein preferably, the fifth component E is selected from one or more of an isocyanate, isocyanurate, peroxide, epoxide, oxazoline, oxazine, lactam, carbodiimide or polycarbodiimide comprising two or more functional groups, preferably an isocyanate comprising two or more functional groups, and more preferably hexamethylene diisocyanate;
preferably, based on the total molar weight of the first component A, the fifth component E has a content of 0.01-5.0 mol%.

**7.** The semi-aromatic polyester according to any one of claims 1-6, wherein the semi-aromatic polyester has a viscosity number of 100-350 ml/g as determined in a phenol/o-dichlorobenzene solution having a weight ratio of 1:1 in a 25$\pm$0.05°C thermostatic water bath in accordance with the provision of GB/T 17931-1999;
preferably, the semi-aromatic polyester has a carboxyl group content of 5-60 mmol/kg, and further preferably 10-50

mmol/kg.

**8.** A method for preparing the semi-aromatic polyester according to any one of claims 1-7, comprising the following steps:

S1: mixing a first component A, a second component B and a portion of a catalyst (a fourth component D being also added if necessary), and heating up to 150-280°C for esterification reaction for 1-2 h in an esterification reactor to obtain an esterification product AB, wherein a molar content of the second component B is usually 1.1-3.0 times that of the first component A, and the excessive second component B is recycled to the esterification reactor by a purification device connected to the esterification reactor;
S2: performing primary polycondensation on the esterification product AB obtained in the step S1 under the action of the remaining catalyst at a reaction temperature of 230-270°C until a reaction product reaches a viscosity number of 20-60 ml/g as determined in a phenol/o-dichlorobenzene solution having a weight ratio of 1:1 in a 25±0.05°C thermostatic water bath in accordance with the provision of GB/T 17931-1999; and
S3: transferring the primary polycondensation product obtained in the step S2 into a final polycondensation kettle for continuous polycondensation at a temperature of 220-270°C until a reaction product reaches a viscosity number of 100-250 ml/g as determined in a phenol/o-dichlorobenzene solution having a weight ratio of 1:1 in a 25±0.05°C thermostatic water bath in accordance with the provision of GB/T 17931-1999, and the reaction product has a carboxyl group content of 5-60 mmol/kg, to obtain the semi-aromatic polyester;
wherein preferably, in the step S1, the purification device is a combination of a process column and a short-path distiller;
preferably, in the step S1, the catalyst is added in an amount of 0.001-1%, and preferably 0.02-0.2% of a final weight of the semi-aromatic polyester;
preferably, in the step S1, the catalyst is added in an amount of 50-80 wt% of a total weight of the catalyst;
preferably, in the step S2, the reaction temperature is 240-260°C;
preferably, in the step S2, a pressure is 0.1-0.5 bar, and preferably 0.2-0.4 bar at the beginning; and a pressure is 5-200 mbar, and preferably 10-100 mbar at the end;
preferably, in the step S2, a reaction time is 1-5 h;
preferably, the reaction product of the primary polycondensation in the step S2 has a carboxyl group content of 10-60 mmol/kg;
preferably, in the step S3, the reaction temperature of the continuous polycondensation is 230-270°C;
preferably, in the step S3, a pressure is 0.2-5 mbar, and preferably 0.5-3 mbar at the beginning;
preferably, in the step S3, a reaction time is 30-90 min, and preferably 40-80 min;
preferably, in the step S3, the reaction product has a carboxyl group content of 10-50 mmol/kg;
preferably, the catalyst is a tin compound, an antimony compound, a cobalt compound, a lead compound, a zinc compound, an aluminium compound or a titanium compound, preferably, a zinc compound, an aluminium compound or a titanium compound, and more preferably tetrabutyl orthotitanate or tetraisopropyl orthotitanate;
preferably, the step S3 further comprises a step of adding a passivator to a reaction system;
preferably, the passivator is a compound of phosphorus comprising phosphoric acid, phosphorous acid, and esters thereof; and
preferably, if necessary, at the end of the step S3, a step S4 is conducted: adding the semi-aromatic polyester obtained in the step S3 to a twin-screw extruder together with a fifth component E in an amount of 0.01-5.0 mol% (based on the total molar weight of the first component A) for retention for 0.5-15 min at a reaction temperature of 200-270°C to obtain a semi-aromatic polyester, wherein the semi-aromatic polyester has a viscosity number of 150-350 ml/g as determined in a phenol/o-dichlorobenzene solution having a weight ratio of 1:1 in a 25±0.05°C thermostatic water bath in accordance with the provision of GB/T 17931-1999.

**9.** A semi-aromatic polyester molding composition, comprising the following components in weight percentage:

5-95 wt% of the semi-aromatic polyester according to any one of claims 1-7;
5-95 wt% of an additive and/or other polymers; and
0-70 wt% of a reinforcing material and/or a filler.

**10.** Use of the semi-aromatic polyester according to any one of claims 1-7 in preparing a compost-degradable product, wherein the compost-degradable product is a fiber, a film, or a container.

**11.** Use of the semi-aromatic polyester according to any one of claims 1-7 in preparing a sucker.

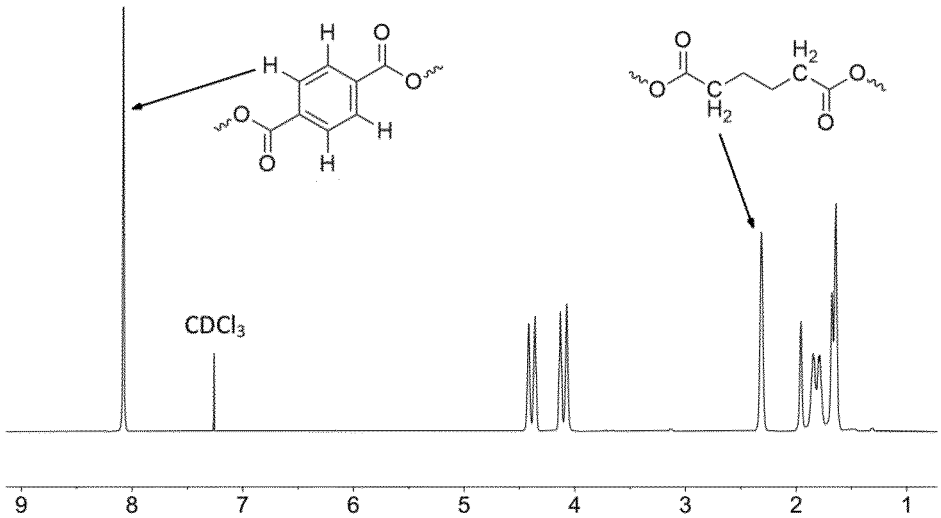


FIG. 1

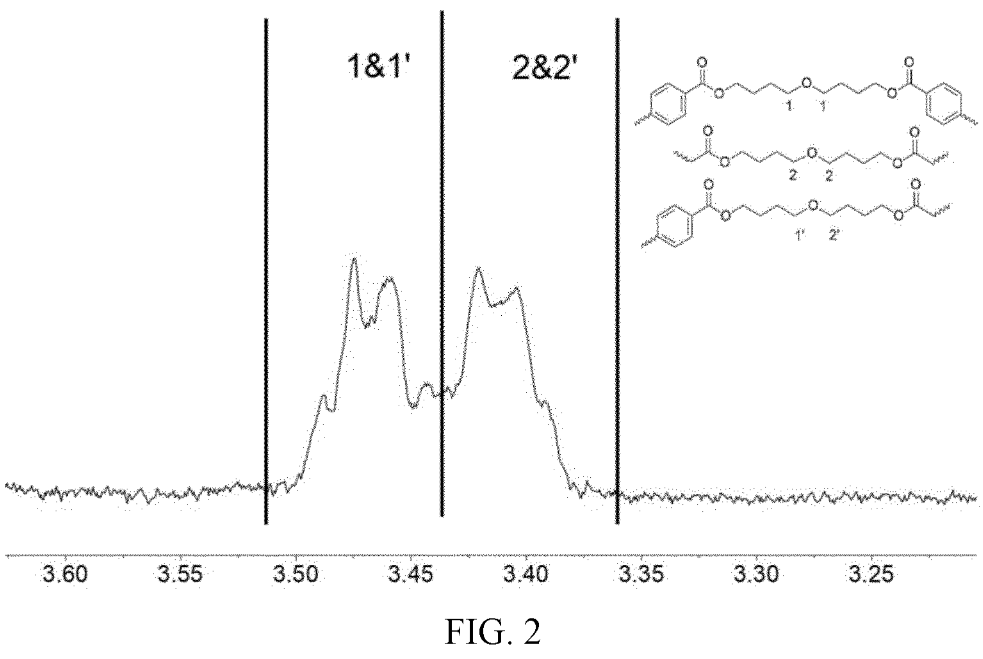


FIG. 2

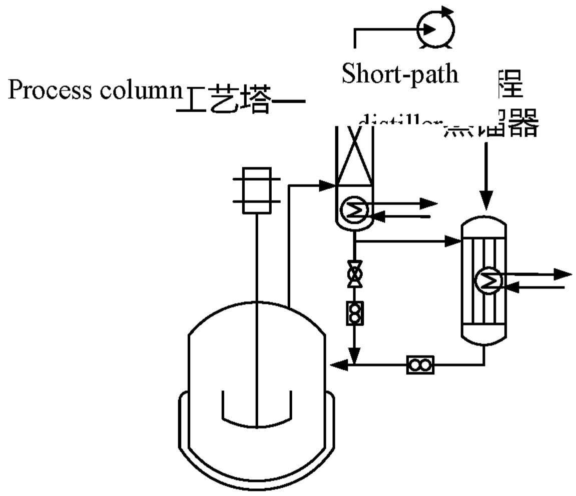
Process column工艺塔
Short-path

FIG. 3

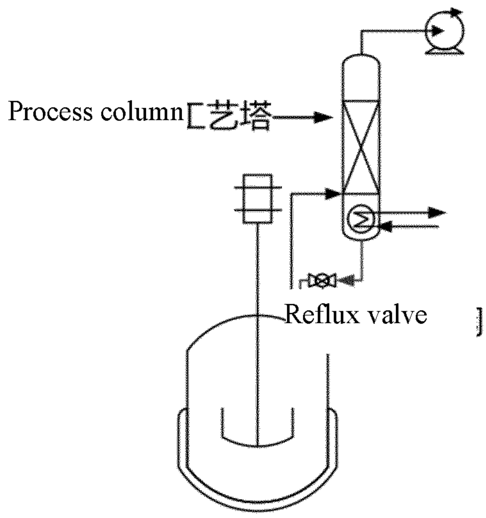
Process column工艺塔
Reflux valve

FIG. 4

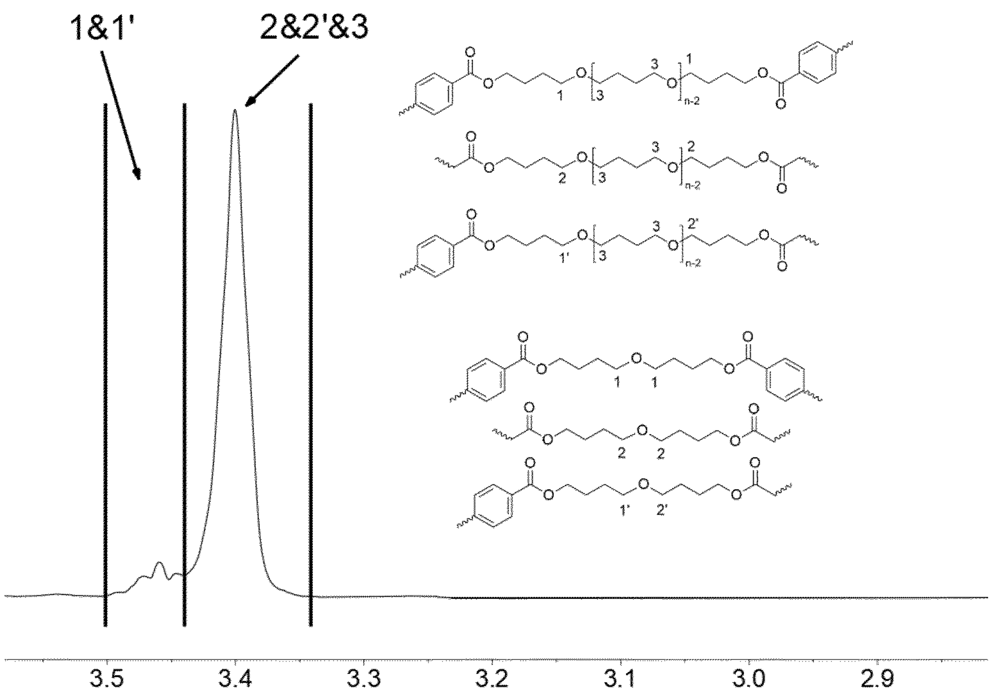


FIG. 5

**INTERNATIONAL SEARCH REPORT**

International application No.
**PCT/CN2021/119956**

**A. CLASSIFICATION OF SUBJECT MATTER**

C08G 63/183(2006.01)i; C08G 63/672(2006.01)i; C08L 67/02(2006.01)i; C08G 63/78(2006.01)i

According to International Patent Classification (IPC) or to both national classification and IPC

**B. FIELDS SEARCHED**

Minimum documentation searched (classification system followed by classification symbols)

C08G63/-,C08L67/-

Documentation searched other than minimum documentation to the extent that such documents are included in the fields searched

Electronic data base consulted during the international search (name of data base and, where practicable, search terms used)

CNPAT, CNKI, WPI, EPODOC, STN: 聚酯, 二酸, 丁二醇, 己二酸, 对苯二甲酸, PBAT, AA, diacid, butanediol, polyester, adipic acid, Terephthalic acid, TBOT, 1191058-3-09-9, 28324-25-6

**C. DOCUMENTS CONSIDERED TO BE RELEVANT**

| Category* | Citation of document, with indication, where appropriate, of the relevant passages | Relevant to claim No. |
|---|---|---|
| X | CN 102007160 A (BASF SE) 06 April 2011 (2011-04-06)<br>description, paragraphs 0016-0036, and embodiments | 1-11 |
| X | CN 111978521 A (WANHUA CHEMICAL GROUP CO., LTD.) 24 November 2020 (2020-11-24)<br>description, paragraphs 0011-0014 and 0061, and embodiment 5 | 1-11 |
| X | CN 111269406 A (DAI QINGWEN) 12 June 2020 (2020-06-12)<br>description, paragraphs 0052-0053, and embodiment 1 | 1-11 |
| A | CN 103408739 A (SHANDONG FUWIN NEW MATERIAL CO., LTD.) 27 November 2013 (2013-11-27)<br>description, embodiment 1 | 1-11 |
| A | WO 2016050962 A1 (NOVAMONT S.P.A.) 07 April 2016 (2016-04-07)<br>description, and abstract | 1-11 |
| A | CN 102558519 A (SHANGHAI LIRI TECHNOLOGIES CO., LTD.) 11 July 2012 (2012-07-11)<br>description, paragraphs 0036-0037 | 1-11 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **06 May 2022** | **25 May 2022** |
| Name and mailing address of the ISA/CN<br>**China National Intellectual Property Administration (ISA/CN)**<br>**No. 6, Xitucheng Road, Jimenqiao, Haidian District, Beijing 100088, China**<br>Facsimile No. **(86-10)62019451** | Authorized officer<br><br>Telephone No. |

Form PCT/ISA/210 (second sheet) (January 2015)

**INTERNATIONAL SEARCH REPORT**

International application No.
**PCT/CN2021/119956**

**C. DOCUMENTS CONSIDERED TO BE RELEVANT**

| Category* | Citation of document, with indication, where appropriate, of the relevant passages | Relevant to claim No. |
|---|---|---|
| A | CN 107257814 A (PTT GLOBAL CHEMICAL PUBLIC COMPANY LIMITED) 17 October 2017 (2017-10-17)<br>claims 1-19 | 1-11 |
| A | CN 110591057 A (REDAVENUE CHEMICAL (CHINA) CO., LTD.) 20 December 2019 (2019-12-20)<br>description, embodiment 1 | 1-11 |
| A | WO 2014021543 A1 (SAMSUNG FINE CHEMICALS CO., LTD.) 06 February 2014 (2014-02-06)<br>description, embodiment 1 | 1-11 |

Form PCT/ISA/210 (second sheet) (January 2015)

**INTERNATIONAL SEARCH REPORT**
**Information on patent family members**

International application No.
**PCT/CN2021/119956**

| Patent document cited in search report | | | Publication date (day/month/year) | Patent family member(s) | | | Publication date (day/month/year) |
|---|---|---|---|---|---|---|---|
| CN | 102007160 | A | 06 April 2011 | US | 2011034662 | A1 | 10 February 2011 |
| | | | | EP | 2268704 | A1 | 05 January 2011 |
| | | | | JP | 2011516708 | A | 26 May 2011 |
| | | | | WO | 2009127555 | A1 | 22 October 2009 |
| | | | | EP | 2628758 | A1 | 21 August 2013 |
| | | | | KR | 20110007186 | A | 21 January 2011 |
| | | | | CN | 102007160 | B | 29 May 2013 |
| | | | | EP | 2628758 | B1 | 08 October 2014 |
| | | | | JP | 5675586 | B2 | 25 February 2015 |
| CN | 111978521 | A | 24 November 2020 | | None | | |
| CN | 111269406 | A | 12 June 2020 | | None | | |
| CN | 103408739 | A | 27 November 2013 | | None | | |
| WO | 2016050962 | A1 | 07 April 2016 | EP | 3201253 | A1 | 09 August 2017 |
| | | | | WO | 2016050963 | A1 | 07 April 2016 |
| | | | | US | 2018237583 | A1 | 23 August 2018 |
| | | | | EP | 3201252 | A1 | 09 August 2017 |
| | | | | US | 2018237584 | A1 | 23 August 2018 |
| | | | | US | 10294327 | B2 | 21 May 2019 |
| | | | | US | 10301425 | B2 | 28 May 2019 |
| CN | 102558519 | A | 11 July 2012 | | None | | |
| CN | 107257814 | A | 17 October 2017 | US | 2017342208 | A1 | 30 November 2017 |
| | | | | WO | 2016108768 | A1 | 07 July 2016 |
| | | | | PL | 3240818 | T3 | 30 September 2019 |
| | | | | JP | 2018500447 | A | 11 January 2018 |
| | | | | KR | 20170102491 | A | 11 September 2017 |
| | | | | EP | 3240818 | A1 | 08 November 2017 |
| | | | | ES | 2729986 | T3 | 07 November 2019 |
| CN | 110591057 | A | 20 December 2019 | CN | 110591057 | B | 01 November 2021 |
| WO | 2014021543 | A1 | 06 February 2014 | JP | 2015523453 | A | 13 August 2015 |
| | | | | US | 2015152218 | A1 | 04 June 2015 |
| | | | | TW | 201410734 | A | 16 March 2014 |
| | | | | EP | 2881415 | A1 | 10 June 2015 |
| | | | | KR | 20140018468 | A | 13 February 2014 |
| | | | | AU | 2013297329 | A1 | 20 November 2014 |
| | | | | CN | 104487482 | A | 01 April 2015 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2018219708 A1
- CN 212560068 U


### Non-patent literature cited in the description


- 2. Poly(ethylene terephthalate) Polymerization - Mechanism, Catalysis, Kinetics, Mass Transfer and Reactor Design. **RIECKMANN, T. ; VOLKER, S.** In Modern Polyesters: Chemistry and Technology of Polyesters and Copolyesters. John Wiley & Sons, Ltd, 2003, 63
- **CHEN, X ; CHEN, W ; ZHU, G ; HUANG, F. ; ZHANG, J.** Synthesis, 1H-NMR characterization, and biodegradation behavior of aliphatic-aromatic random copolyester. *J. Appl. Polym. Sci.,* 2007, vol. 104 (4), 2643-2649
- **MILES, W. H. ; RUDDY, D. A ; TINORGAH, S ; GEISLER, R. L.** Acylative Dimerization of Tetrahydrofuran Catalyzed by Rare-Earth Triflates. *Synth. Commun.,* 2004, vol. 34 (10), 1871-1880
- **ALEXANDER, K ; SCHNIEPP, L. E.** 4,4'-Dichlorodibutyl Ether and its Derivatives from Tetrahydrofuran. *J. Am. Chem. Soc.,* 1948, vol. 70 (5), 1839-1842